# EUROPÄISCHE PATENTSCHRIFT

(11) **EP 2 145 086 B1**
(45) Veröffentlichungstag und Bekanntmachung des Hinweises auf die Patenterteilung: **10.07.2013**
(21) Anmeldenummer: 08750004.7
(22) Anmeldetag: 02.05.2008
(51) Int. Cl.: F01N 3/20, F01N 9/00, B01D 53/94, B01D 53/90, C01B 21/02

(54) **VERFAHREN ZUM BEREITSTELLEN VON AMMONIAK ZUR SELEKTIVEN KATALYTISCHEN REDUKTION VON STICKOXIDEN UND ENTSPRECHENDE VORRICHTUNG**
METHOD FOR PROVIDING AMMONIA FOR THE SELECTIVE CATALYTIC REDUCTION OF NITROGEN OXIDES, AND CORRESPONDING DEVICE
PROCÉDÉ DE PRÉPARATION D'AMMONIAC EN VUE DE LA RÉDUCTION CATALYTIQUE SÉLECTIVE D'OXYDES D'AZOTE, ET DISPOSITIF CORRESPONDANT

(30) Priorität: 08.05.2007 DE 102007031530
(43) Veröffentlichungstag der Anmeldung: 20.01.2010
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HIRTH, Peter, 51503 Rösrath (DE)
(74) Vertreter: Kahlhöfer, Hermann
(86) Internationale Anmeldenummer: PCT/EP2008/055435
(87) Internationale Veröffentlichungsnummer: WO 2008/135535

(56) Entgegenhaltungen:
- EP-A- 1 481 719
- WO-A-2006/087541
- DE-A1- 10 346 715
- DE-C1- 19 743 302
- US-A1- 2006 101 811

## Beschreibung

Gegenstand der vorliegenden Erfindung ist ein Verfahren zum Bereitstellen von Ammoniak zur selektiven katalytischen Reduktion von Stickoxiden im Abgassystem einer Verbrennungskraftmaschine und eine entsprechende Vorrichtung zur Durchführung dieses Verfahrens.

Zahlreiche Komponenten im Abgas von Verbrennungskraftmaschinen sind in vielen Ländern unerwünscht. Um die Emission dieser Bestandteile des Abgases möglichst gering zu halten, existieren oftmals gesetzlich vorgegebene Grenzwerte, die die Abgase von Verbrennungskraftmaschinen einhalten müssen. Ein möglicher unerwünschter Bestandteil sind Stickoxide (NOₓ). Die Emission von Stickoxiden kann einerseits durch innermotorische Maßnahmen verringert werden, andererseits kann dies durch eine alternative oder zusätzliche Abgasnachbehandlung erfolgen. Eine Möglichkeit der Abgasnachbehandlung zur Reduktion des Anteils von Stickoxiden im Abgas von Verbrennungskraftmaschinen stellt die selektive katalytische Reduktion dieser Stickoxide dar. Bei diesem Verfahren werden die Stickoxide durch ein selektiv auf diese wirkendes Reduktionsmittel wie beispielsweise Ammoniak reduziert.

Aufgrund der gerade bei dynamischen Anwendungen wie in Automobilen vorliegenden starken Dynamik der Stickoxidemission aufgrund der sich schnell und zum Teil gravierend ändernden Lastzustände der Verbrennungskraftmaschine weisen übliche Steuerungen zur Zugabe von Reduktionsmittel zum Abgas von Verbrennungskraftmaschinen oftmals auf dieser Dynamik beruhende Probleme auf, die dazu führen, dass eine ungenügende Umsetzung der Stickoxide im Abgas der Verbrennungskraftmaschine erfolgen.

Eine derartige Steuerung offenbart die WO 2006/087541 A1. Dort wird eine wässrige Harnstofflösung in einer in der Abgasleitung angeordneten Kammer verdampft und dem Abgas zugegeben. Die Regelung der Zugabe erfolgt in Abhängigkeit des Ist-Zustandes der Verbrennungskraftmaschine. Eine weitere Steuerung wird in der DE 103 46 715 A offenbart.

Hiervon ausgehend liegt der vorliegenden Erfindung die Aufgabe zugrunde, ein Verfahren zum Bereitstellen von Ammoniak anzugeben, welches die aus dem Stand der Technik bekannten Nachteile zumindest lindert und insbesondere auch unter hochdynamischen Änderungen der Stickoxidkonzentration im Abgas der Verbrennungskraftmaschine eine möglichst gute Umsetzung der Stickoxide erlaubt. Weiterhin soll eine entsprechende Vorrichtung vorgeschlagen werden.

Diese Aufgaben werden gelöst durch ein Verfahren und eine Vorrichtung mit den Merkmalen der unabhängigen Ansprüche. Die jeweiligen abhängigen Ansprüche sind auf vorteilhafte Weiterbildungen gerichtet.

Das erfindungsgemäße Verfahren zum Bereitstellen von Ammoniak zur selektiven katalytischen Reduktion von Stickoxiden im Abgassystem einer Verbrennungskraftmaschine, umfasset die folgenden Schritte:
a) Aufnehmen mindestens einer einer Stellgröße zur Beeinflussung des Zustandes der Verbrennungskraftmaschine;
b) Berechnung einer möglichen Stickoxid-Emission der Verbrennungskraftmaschine basierend auf einer Auswertung der mindestens einen gemessenen Größe;
c) Berechnung einer der möglichen Stickoxid-Emission entsprechenden Ammoniakmenge; und
d) Initiierung der Bereitstellung der entsprechenden Ammoniakmenge
und zeichnet sich dadurch aus, dass die Bereitstellung der Ammoniakmenge in Schritt d) durch abgasexterne Verdampfung in einem Verdampfer und abgasexterne Hydrolyse von Harnstoff-Wasserlösung erfolgt, wobei mindestens eine der folgenden Größen:
a) die Heizleistung des Verdampfers und
b) die Menge an Harnstoff-Wasserlösung, die dem Verdampfer zugeführt wird, anhand der in Schritt c) berechneten Ammoniakmenge geregelt wird.

Unter der Aufnahme der Stellgröße gemäß Schritt a) wird insbesondere eine Messung dieser Stellgröße verstanden. Alternativ oder zusätzlich kann dabei auch auf gespeicherte Daten zurückgegriffen werden oder eine entsprechende Berechnung erfolgen. Erfindungsgemäß wird als gemessene Größe auch der aktuelle Ist-Zustand der Verbrennungskraftmaschine verstanden. Unter dem aktuellen Ist-Zustand der Verbrennungskraftmaschine wird insbesondere der aktuelle Betriebspunkt im Kennfeld der Verbrennungskraftmaschine verstanden. Unter einer Stellgröße zur Beeinflussung des Zustandes der Verbrennungskraftmaschine werden sämtliche Größen verstanden, die Einfluss auf den Betriebszustand der Verbrennungskraftmaschine nehmen können. Insbesondere wird hierunter der Pedalwertgeber des Gaspedals verstanden. In Schritt b) erfolgt die Berechnung einer möglichen Stickoxidemission der Verbrennungskraftmaschine. Insbesondere wird hierbei die durch die gemessenen Größen resultierende Änderung des Ist-Zustandes der Verbrennungskraftmaschine berücksichtigt. Beispielsweise bedeutet dies, dass aufgrund des momentanen Betriebszustandes der Verbrennungskraftmaschine und eine Änderung des Stellwinkels des Pedalwertgebers auf einen möglichen Soll-Zustand der Verbrennungskraftmaschine nach ausgeführter Beschleunigung geschlossen wird und der dann vorliegende Stickoxid-Gehalt des Abgases berechnet wird. Basierend auf dieser Stickoxid-Emission wird die zur vollständigen Umsetzung benötigte Ammoniakmenge berechnet und daran anschließend die Bereitstellung dieser ermittelten Annnoniakmenge initiiert. Erfindungsgemäß wird in Schritt b) mindestens ein früherer Wert mindestens einer der mindestens einen gemessenen Größe berücksichtigt.

Erfindungsgemäß erfolgt die Verdampfung und Hydrolyse der Harnstoff-Wasserlösung zur Erzeugung von Ammoniak abgasextern, das heißt in Bauteilen, die üblicherweise nicht von Abgas durchströmt werden. Bevorzugt ist ein elektrisch beheizter Verdampfer vorgesehen. Durch die abgasexterne Verdampfung und Hydrolyse können präzise die nötigen Ammoniakmengen bereitgestellt werden, insbesondere der Hydrolysekatalysator kann kleiner ausgeführt werden als bei Ausgestaltungen in der Abgasleitung, da die entsprechende durch den Hydrolysekatalysator zu führende Gasmenge kleiner ist.

Das erfindungsgemäße Verfahren erlaubt in vorteilhafter Weise eine Anpassung der Ammoniakdosierung an hochdynamische Stickoxidgehaltsänderungen im Abgas, so dass auch beispielsweise in mobilen Anwendungen wie Kraftfahrzeugen eine möglichst gute Umsetzung der Stickoxide im Abgas der Verbrennungskraftmaschine erreicht werden kann, wobei gleichzeitig nicht auf die Vorteile einer abgasexternen Erzeugung des Ammoniaks aus Harnstoff-Wasser-Lösung verzichtet werden muss.

Gemäß einer weiteren vorteilhaften Ausgestaltung des erfindungsgemäßen Verfahrens wird in Schritt c) eine gespeicherte Menge an Ammoniak und deren mögliche Umsetzung berücksichtigt.

Insbesondere werden SCR-Katalysatoren (selektive katalytische Reduktion, SCR) zur Durchführung der SCR-Reaktion eingesetzt. Diese weisen katalytisch aktive Beschichtungen auf, die eine gewisse Speicherfähigkeit für Ammoniak, insbesondere für Ammoniak, aufweisen. Durch die Berücksichtigung der möglichen Umsetzung, dass heißt insbesondere der Reaktionsbedingungen und insbesondere der Temperatur des Abgases und/oder des SCR-Katalysators, kann extrapoliert werden, welche Menge an Ammoniak gegebenenfalls freigesetzt wird und die zuzugebende Ammoniakmenge entsprechend reduziert werden.

Bei dem erfindungsgemäßen Verfahren umfasst Schritt b) eine Extrapolation auf eine zukünftige Stickoxidemission.

Dies bedeutet, dass basierend auf dem momentanen Ist-Zustand der Verbrennungskraftmaschine im Vergleich zu mindestens einem früheren Zustand der Verbrennungskraftmaschine und/oder mindestens einer Stellgröße zur Beeinflussung des Zustandes der Verbrennungskraftmaschine berechnet wird, wie sich der Zustand der Verbrennungskraftmaschine ändern wird. Darauf basierend wird dann die zu erwartende Stickoxid-Emission berechnet und eine entsprechende Ammoniakmenge bereitgestellt. Hierbei kann insbesondere auch auf fahrerspezifische Werte zurückgegriffen werden, so dass Schritt b) in einer vorteilhaften Ausgestaltung eine fahreradaptive Bestimmung der zukünftigen Stickoxidemission umfasst. Hierbei wird das Fahrverhalten des Fahrers, also insbesondere sein Beschleunigungs- und/oder Verzögerungsverhalten punktuell oder kontinuierlich überwacht und das daraus resultierende Fahrerprofil zur Prognose der zu erwartenden Stickoxidemission, insbesondere unter Berücksichtigung der Werte des Pedalwertgebers herangezogen.

Bei dem erfindungsgemäßen Verfahren wird anhand der Änderung der mindestens einen Stellgröße eine Änderung des Zustandes der Verbrennungskraftmaschine berechnet.

So kann beispielsweise basierend auf einer Änderung des gemessenen Stellwinkels des Pedalwertgebers des Gaspedals abgeschätzt werden, wie ein nun beginnender Beschleunigungs- oder Abbremsvorgang von statten geht und in welchem Soll-Zustand die Verbrennungskraftmaschine diesen Beschleunigungs- oder Bremsvorgang beenden wird. Basierend hierauf und insbesondere unter Berücksichtigung des Weges vom Ist-Zustand zum Soll-Zustand in einem Motorkennfeld kann festgestellt werden, zu welchen Zeitpunkten welcher Bedarf an Ammoniak vorliegt und eine entsprechende Bereitstellung von Ammoniak kann veranlasst werden. Hierbei wird bevorzugt beständig überprüft, ob die Änderung des Zustandes der Verbrennungskraftmaschine dem einmal prognostizierten Wege folgt oder ob hier weitere Korrekturen nötig sind. Weitere Korrekturen können beispielsweise selbst bei konstanter Stellgröße auf eine Änderung der Umgebungsvariablen wie beispielsweise der Neigung, einer Steigung, die zu überwinden ist o. ä., notwendig werden.

Gemäß einer weiteren vorteilhaften Ausgestaltung des erfindungsgemäßen Verfahrens wird in Schritt b) die Wahrscheinlichkeit verschiedener möglicher Änderungen des Zustandes der Verbrennungskraftmaschine vom Ist-Zustand hin zu möglichen Soll-Zuständen berücksichtigt.

Hierbei wird berücksichtigt, dass es für bestimmte Ist-Zustände und bestimmte Soll-Zustände verschiedene Wege gibt, die wahrscheinlicher oder unwahrscheinlicher sind. Insbesondere beruht dies darauf, dass bestimmte Drehzahlverläufe über die Zeit wahrscheinlicher sind als andere Drehzahlverläufe. Dies wird bevorzugt bei der Berechnung einer möglichen Stickoxid-Emission insbesondere durch eine entsprechende Gewichtung berücksichtigt, indem beispielsweise eine Gewichtung mit der Wahrscheinlichkeit des möglichen Auftretens einer bestimmten Drehzahl erfolgt.

Gemäß einer weiteren vorteilhaften Ausgestaltung des erfindungsgemäßen Verfahrens werden in Schritt b) Benutzerspezifische Daten verwendet.

Dies umfasst insbesondere bei Verbrennungskraftmaschine in mobilen Anwendungen die Analyse des Verhaltens des Fahrers, insbesondere sein Beschleunigungs- und/oder Verzögerungsverhaltens, wobei diese Daten als Benutzerspezifische Daten in vorteilhafter Weise zur Prognose und zur Berechnung der zu erwartenden Stickoxidemission herangezogen wird. Insbesondere werden unter Benutzerspezifischen Daten Daten über das Fahrverhalten des Benutzers verstanden.

Gemäß einem weiteren Aspekt der vorliegenden Erfindung wird eine Vorrichtung zur Durchführung des erfindungsgemäßen Verfahrens vorgeschlagen, welche umfasst:
- Mittel zur Bestimmung der folgenden Größen:
   i) eines aktuellen Ist-Zustandes der Verbrennungskraftmaschine und
   ii) mindestens einer Stellgröße zur Beeinflussung des Zustandes der Verbrennungskraftmaschine;

- Steuermittel zur Berechnung einer möglichen Stickoxid-Emission der Verbrennungskraftmaschine basierend auf einer Auswertung der mindestens einen gemessenen Größe unter Berücksichtigung mindestens eines früheren Wertes mindestens einer der mindestens einen gemessenen Größen und zur Berechnung einer der möglichen Stickoxid-Emission entsprechenden Ammoniakmenge; und
- Mittel zur Bereitstellung der Ammoniakmenge, umfassend einen abgasexternen Verdampfer zur Verdampfung von Harnstoff-Wasserlösung und einen abgasexternen Hydrolysekatalysator, sowie Mittel zum Zuführen von Harnstoff-Wasserlösung zu dem Verdampfer.

Die Steuermittel können insbesondere in Form eines elektronischen Bauteils, bevorzugt als Teil der Motorsteuerung, oder in Form einer entsprechend ausgebildeten Software, also einem Computerprogrammprodukt, ausgebildet sein.

Die für das erfindungsgemäße Verfahren offenbarten Details und Vorteile sind auf die erfindungsgemäße Vorrichtung anwend- und übertragbar und umgekehrt.

Die Erfindung wird im Folgenden anhand der beigefügten Figuren näher erläutert, ohne dass sie auf die dort gezeigten Ausführungsbeispiele beschränkt wäre. Es zeigen schematisch:
- Fig. 1:: eine Verbrennungskraftmaschine mit Abgassystem, in der das erfindungsgemäße Verfahren angewendet wird;
- Fig. 2:: ein Beispiel eines Motorkennfeldes; und
- Fig. 3:: ein Beispiel einer Wahrscheinlichkeitsverteilung des Motorkennfeldes.

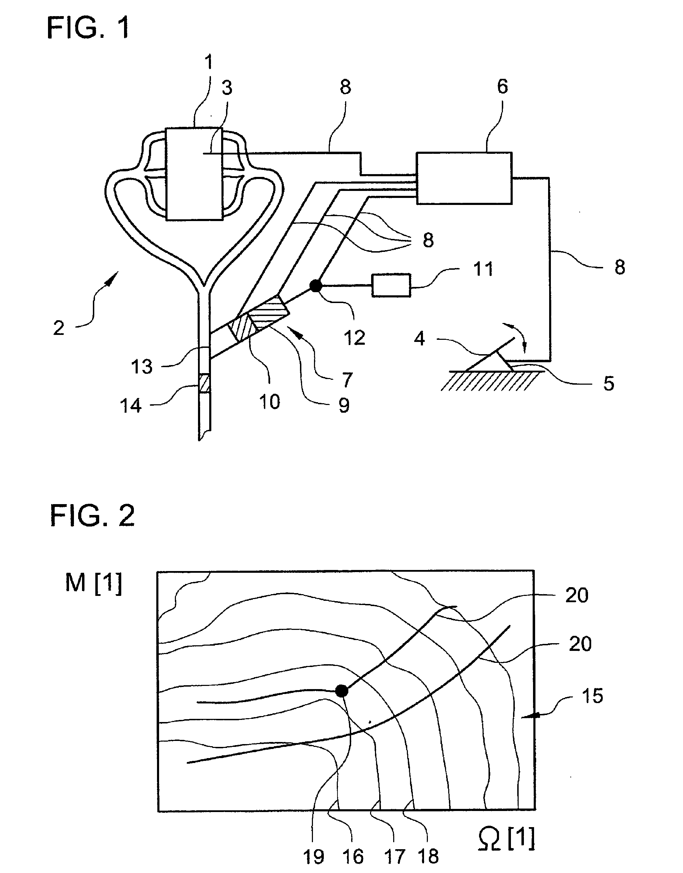

Fig. 1 zeigt schematisch eine Verbrennungskraftmaschine 1 mit Abgassystem 2. Es sind Mittel 3 zur Bestimmung des Ist-Zustandes der Verbrennungskraftmaschine 1 ausgebildet. Insbesondere können über diese Mittel 3 die Drehzahl und/oder der Lastzustand der Verbrennungskraftmaschine 1 bestimmt werden. Weiter ist ein Gaspedal 4 ausgebildet, welches mit Mitteln 5 zur Bestimmung der Stellung des Gaspedals 4 ausgerüstet ist. Die Mittel 5 zur Bestimmung der Stellung des Gaspedals 4 stellen insbesondere eine Stellgröße zur Beeinflussung des Zustandes der Verbrennungskraftmaschine 1 dar, da je nach Stellung des Gaspedals 4 sich der Betriebszustand der Verbrennungskraftmaschine 1 insbesondere im Hinblick auf Drehzahl und/oder Last ändert. Weiterhin sind Steuermittel 6 und Mittel 7 zur Bereitstellung von Ammoniak ausgebildet. Die Steuermittel 6 sind über Datenleitungen 8 mit verschiedenen Bauteilen verbunden, insbesondere mit dem Mittel 3 zur Bestimmung des Ist-Zustandes der Verbrennungskraftmaschine 1, dem Mittel 5 zur Bestimmung der Stellung des Gaspedals 4, dem sogenannten Pedalwertgeber, und mit Teilen der Mittel 7 zur Bereitstellung von Ammoniak.

Die Mittel 7 zur Bereitstellung von Ammoniak sind wie in Fig. 1 gezeigt abgasextem ausgebildet. Das heißt, die Mittel 7 sind so ausgebildet, dass sie im Regelfall nicht von Abgas durchströmt werden. Im vorliegenden Ausführungsbeispiel wird das dadurch erreicht, dass in einem Verdampfer 9 eine Lösung des Reduktionsmittels bzw. eines Reduktionsmittelvorläufers, welcher ein Ammoniak abspalten oder zu einem solchen reagieren kann, verdampft wird, woran sich ein Hydrolysekatalysator 10 anschließt, in dem eine Hydrolyse der verdampften Reduktionsmittelvorläuferlösung erfolgen kann. Der Hydrolysekatalysator 10 umfasst dabei eine katalytisch aktive Schicht oder Beschichtung, die in der Lage ist, die Reaktion des Harnstoffs zu Ammoniak zu katalysieren. Der Verdampfer 9 ist mit einem Reservoir 11 verbindbar. In dem Reservoir 11 wird Harnstoff-Wasser-Lösung vorgehalten. Die Harnstoff-Wasser-Lösung ist über ein Mittel 12 zum Zuführen von Harnstoff-Wasser-Lösung in den Verdampfer 9 wie beispielsweise eine Pumpe in den Verdampfer 9 förderbar. Beispielsweise können Hydrolysekatalysator 10 und Verdampfer 9 beheizbar sein, wobei die Steuermittel 6 bevorzugt auch die Beheizung insbesondere des Verdampfers 9 und gegebenenfalls auch des Hydrolysekatalysators 10 steuern. Hierzu sind auch diese Bauteile 9, 10 bevorzugt über Datenleitungen 8 mit dem Steuermittel 6 verbunden. Gleiches gilt für das Mittel 12, welches ebenfalls über eine entsprechend ausgebildete Datenleitung 8 mit dem Steuermittel 6 verbunden sein kann. Den Hydrolysekatalysator 10 verlässt im Betrieb ein Gasgemisch, welches Ammoniak umfasst. Dieses Gasgemisch wird in der Einleitstelle 13 in das Abgassystem 2 eingebracht. Stromabwärts der Einleitstelle 13 ist ein SCR-Katalysator 14 zur selektiven katalytischen Reduktion von Stickoxiden im Abgas der Verbrennungskraftmaschine 1 ausgebildet. Hydrolysekatalysator 10 und SCR-Katalysator 14 können jeweils mindestens einen Wabenkörper umfassen, welcher bevorzugt aus metallischen Lagen aufgebaut sein oder einen keramischen Monolithen umfassen kann. Hierbei ist eine jeweils entsprechend ausgebildete katalytisch aktive Beschichtung auf dem Wabenkörper eingebracht oder entsprechend sind katalytisch aktive Zentren in den Wabenkörper eingebracht.

Bei Durchführung des erfindungsgemäßen Verfahrens erfolgt zunächst die Aufnahme des aktuellen Ist-Zustandes der Verbrennungskraftmaschine 1 durch die entsprechend ausgebildeten Mittel, wobei insbesondere die Drehzahl und/oder das Drehmoment der Verbrennungskraftmaschine 1 bestimmt wird. Weiterhin wird die aktuelle Stellung des Gaspedals 4 über die entsprechend ausgebildeten Mittel 5 festgestellt. Die dabei entstehenden Daten werden über die Datenleitungen 8, die sowohl einen Draht umfassen als auch drahtlos ausgebildet sein können, an die Steuermittel 6 übertragen und dort weiter verarbeitet. Unter Berücksichtigung mindestens eines früheren Wertes des aktuellen Ist-Zustandes und/oder der entsprechenden Stellgröße wie des entsprechenden Winkels des Gaspedals 4 kann nun eine mögliche Stickoxid-Emission der Verbrennungskraftmaschine 1 berechnet werden. Insbesondere bedeutet dies, dass der aktuelle Ist-Zustand mit einem früheren Ist-Zustand verglichen und gegebenenfalls ein Differenzvektor bestimmt wird, der eine mögliche Richtung im Motorkennfeld erkennbar macht. Hierbei kann auch die Veränderung der Stellgröße, also insbesondere der Stellung des Gaspedals 4 berücksichtigt werden. So kann aus einer entsprechenden Veränderung der Stellung des Gaspedals 4 auf eine nun erfolgende Beschleunigung oder Verzögerung eines durch die Verbrennungskraftmaschine 1 angetriebenen Kraftfahrzeugs geschlossen werden. Hierdurch können weiterhin mögliche zukünftige Stickoxidemissionen berechnet und die Mittel 7 zur Bereitstellung von Reduktionsmittel entsprechend angesteuert werden, dass dann, wenn die Abgase mit diesem Stickoxidgehalt den SCR-Katalysator 14 erreichen, genau die entsprechend nötige Menge Ammoniak bereitgestellt wird. Hier zeigt sich einer der Vorteile der vorliegenden Erfindung, dass nämlich mehr Zeit gewonnen wird zwischen der Kenntnis der Stickoxidemission und der Umsetzung, die insbesondere bei relativ trägen Systemen zur Reduktionsmittelbereitstellung genutzt werden kann, um die Umsetzungsrate der Stickoxide zu verbessern.

Fig. 2 zeigt schematisch ein sogenanntes Motorkennfeld 15. Das Motorkennfeld 15 zeigt im vorliegenden Ausführungsbeispiel die emittierte Menge an Stickoxid in Abhängigkeit von der Drehzahl Ω und dem Drehmoment M. Sowohl Drehzahl Ω als auch Drehmoment M sind in willkürlichen Einheiten angegeben. Die entsprechenden Stickoxidemissionen sind als Kurvenschar gezeigt, die Werte gleicher Stickoxidemission miteinander verbinden. So verbindet beispielsweise die erste Linie 16 sämtliche Werte einer Stickoxidemission von 100 ppm (parts per million), die zweite Linie 17 verbindet Werte mit einer Stickoxidemission von 200 ppm, die dritte Linie 18 Werte mit einer Stickoxidemission von 300 ppm usw. Der aktuelle Ist-Zustand 19 ist durch die zugehörige Drehzahl Ω und das zugehörige Drehmoment M bestimmt. Weiterhin zeigt Fig. 2 übliche Beschleunigungsverläufe 20. Diese üblichen Beschleunigungsverläufe 20 geben die Reaktion der Verbrennungskraftmaschine 1 auf eine Erhöhung oder Erniedrigung der Drehzahl Ω an, die sich üblicherweise in einer Veränderung des anliegenden Drehmoments M niederschlägt. Der Verlauf dieser Beschleunigungsverläufe 20 kann sich abhängig von äußeren Bedingungen wie insbesondere Straßenbelag, Steigung, Geschwindigkeit, Luftwiderstand, Reibungswiderstand und ähnliches ändern. Aus der Änderung der Stellung des Gaspedals 4 der mögliche Beschleunigungsverlauf 20 extrapoliert werden kann. Hierbei kann insbesondere auf ein Parameter adaptives Anpassungsverfahren zurückgegriffen werden.

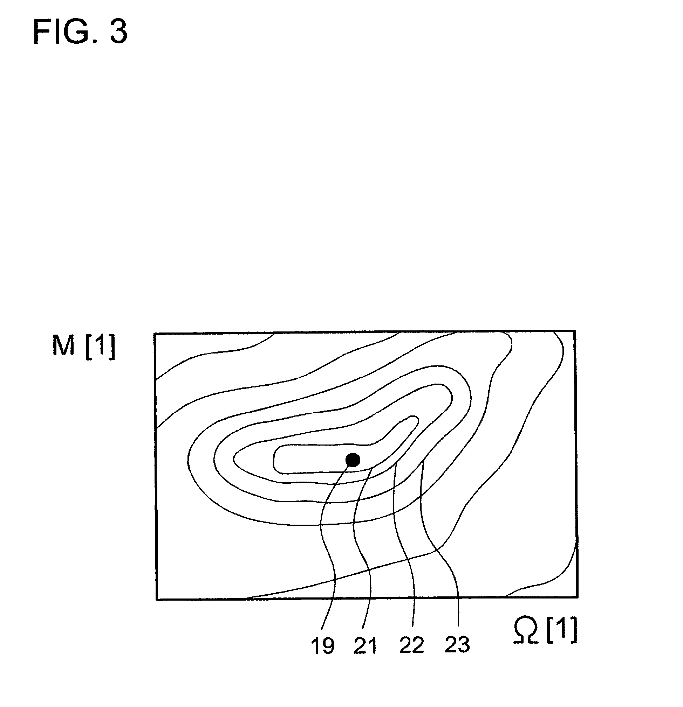

Fig. 3 zeigt eine zugehörige Wahrscheinlichkeitsverteilung. Ausgehend vom aktuellen Ist-Zustand 19 der Verbrennungskraftmaschine 1 zeigt Fig. 3 die Wahrscheinlichkeit, dass bestimmte Soll-Zustände der Verbrennungskraftmaschine 1 erreicht werden können. Die erste Linie 21 verbindet alle Punkte mit einer Wahrscheinlichkeit von 90 %, die ausgehend vom aktuellen Ist-Zustand 19 erreicht werden können. Die zweite Linie 22 verbindet Punkte einer Wahrscheinlichkeit von 85 %, die dritte Linie 23 verbindet Punkte einer Wahrscheinlichkeit von 80 % miteinander. Basierend auf diesen Wahrscheinlichkeitsdaten kann zusammen gehen mit der Veränderung der mindestens einen Stellgröße wie beispielsweise der Stellung des Gaspedals 3 recht genau berechnet werden, welcher Soll-Zustand durch die gerade erfolgte Änderung der Stellgröße erreicht werden kann. Aufgrund des Motorkennfeldes 15 ist aber die Stickoxidemission bei diesem Soll-Zustand bekannt, so dass dann die Bereitstellung einer entsprechenden Menge Ammoniak initiiert werden kann.

Das erfindungsgemäße Verfahren und die erfindungsgemäße Vorrichtung vergrößern den zeitlichen Spielraum zur Bereitstellung einer entsprechenden Menge an Ammoniak als Reduktionsmittel zur selektiven katalytischen Reduktion der Stickoxide im Abgas einer Verbrennungskraftmaschine 1 dadurch, dass ein Zeitvorsprung gewonnen wird, der beispielsweise auf der Extrapolation der Stickoxid-Emission ausgehend vom Ist-Zustand 19 der Verbrennungskraftmaschine 1 und der Änderung mindestens einer Stellgröße wie beispielsweise der Änderung der Stellung des Gaspedals 4 und unter Berücksichtigung der Laufzeit des Abgases durch das Abgassystem 2 der Verbrennungskraftmaschine 1 beruht. Hierdurch können insbesondere träge Systeme zur Bereitstellung von Reduktionsmittel effektiv eingesetzt werden, so dass eine verbesserte Umsetzung der Stickoxide im Abgas der Verbrennungskraftmaschine 1 erreicht werden kann.

**Bezugszeichenliste**

| | |
|---|---|
| 1 | Verbrennungskraftmaschine |
| 2 | Abgassystem |
| 3 | Mittel zur Bestimmung des Ist-Zustandes der Verbrennungskraftmaschine |
| 4 | Gaspedal |
| 5 | Mittel zur Bestimmung der Stellung des Gaspedals |
| 6 | Steuermittel |
| 7 | Mittel zur Bereitstellung von Reduktionsmittel |
| 8 | Datenleitung |
| 9 | Verdampfer |
| 10 | Hydrolysekatalysator |
| 11 | Reservoir |
| 12 | Mittel zum Zuführen von Harnstoff-Wasser-Lösung zum Verdampfer |
| 13 | Einleitstelle |
| 14 | SCR-Katalysator |
| 15 | Motorkennfeld |
| 16 | erste Linie |
| 17 | zweite Linie |
| 18 | dritte Linie |
| 19 | aktueller Ist-Zustand der Verbrennungskraftmaschine |
| 20 | Beschleunigungsverlauf |
| 21 | erste Linie |
| 22 | zweite Linie |
| 23 | dritte Linie |
| | |
| Ω | Drehzahl |
| M | Drehmoment |

## Patentansprüche

1. Verfahren zum Bereitstellen von Ammoniak zur selektiven katalytischen Reduktion von Stickoxiden im Abgassystem einer Verbrennungskraftmaschine, umfassend die folgenden Schritte:
a) Aufnehmen mindestens einer Stellgröße zur Beeinflussung des Zustandes der Verbrennungskraftmaschine;
b) Berechnung einer möglichen Stickoxid-Emission der Verbrennungskraftmaschine basierend auf einer Auswertung der mindestens einen gemessenen Größe;
c) Berechnung einer der möglichen Stickoxid-Emission entsprechenden Ammoniakmenge; und
d) Initiierung der Bereitstellung der entsprechenden Ammoniakmenge, **dadurch gekennzeichnet, dass** die Bereitstellung der Ammoniakmenge in Schritt d) durch abgasexterne Verdampfung in einem Verdampfer und abgasexterne Hydrolyse von Harnstoff-Wasserlösung erfolgt, wobei mindestens eine der folgenden Größen:
a) die Heizleistung des Verdampfers und
b) die Menge an Harnstoff-Wasserlösung, die dem Verdampfer zugeführt
wird,
anhand der in Schritt c) berechneten Ammoniakmenge geregelt wird, wobei weiter als gemessene Größe auch der aktuelle Ist-Zustand der Verbrennungskraftmaschine bereitgestellt wird und anhand der Änderung der mindestens einen Stellgröße eine Änderung des Zustandes der Verbrennungskraftmaschine berechnet wird, so dass auf einen möglichen Soll-Zustand der Verbrennungskraftmaschine geschlossen und der dann vorliegende Stickoxid-Gehalt des Abgases berechnet wird, und bei der Schritt b) unter Berücksichtigung mindestens eines früheren Wertes mindestens einer der mindestens einen gemessenen Größe erfolgt und damit eine Extrapolation auf eine zukünftige Stickoxid-Emission umfasst, wobei ein Pedalwertgeber eines Gaspedals als mindestens eine Stellgröße betrachtet wird.

2. Verfahren nach Anspruch 1, bei dem in Schritt c) eine gespeicherte Menge an Reduktionsmittel und deren mögliche Umsetzung berücksichtigt wird.

3. Verfahren nach einem der vorhergehenden Ansprüche, bei der in Schritt b) die Wahrscheinlichkeit verschiedener möglicher Änderungen des Zustandes der Verbrennungskraftmaschine vom Ist-Zustand hin zu möglichen Soll-Zuständen berücksichtigt wird.

4. Verfahren nach einem der vorhergehenden Ansprüche, bei dem Schritt b) ein parameteradaptives Schätzverfahren umfasst.

5. Verfahren nach einem der vorhergehenden Ansprüche, bei dem in Schritt b) Benutzerspezifische Daten verwendet werden.

6. Vorrichtung zur Durchführung des Verfahrens nach einem der vorhergehenden Ansprüche, umfassend:
- Mittel zur Bestimmung der folgenden Größen:
i) eines aktuellen Ist-Zustandes der Verbrennungskraftmaschine (1) und
ii) mindestens einer Stellgröße zur Beeinflussung des Zustandes der Verbrennungskraftmaschine (1);
- Steuermittel (6) zur Berechnung einer möglichen Stickoxid-Emission der Verbrennungskraftmaschine (1) basierend auf einer Auswertung der mindestens einen gemessenen Größe unter Berücksichtigung mindestens eines früheren Wertes mindestens einer der mindestens einen gemessenen Größen und zur Berechnung einer der möglichen Stickoxid-Emission entsprechenden Ammoniakmenge; und
- Mittel zur Bereitstellung der Ammoniakmenge umfassend einen abgasexternen Verdampfer (9) zur Verdampfung von Harnstoff-Wasserlösung und einen abgasexternen Hydrolysekatalysator (10), sowie Mittel (12) zum Zuführen von Harnstoff-Wasserlösung zu dem Verdampfer (9).

## Claims

1. Method for providing ammonia for the selective catalytic reduction of nitrogen oxides in the exhaust system of an internal combustion engine, comprising the following steps:
a) recording at least one actuating variable for influencing the state of the internal combustion engine;
b) calculating a possible nitrogen oxide emission of the internal combustion engine on the basis of an evaluation of the at least one measured variable;
c) calculating an ammonia quantity corresponding to the possible nitrogen oxide emission; and
d) initiating the provision of the corresponding ammonia quantity, **characterized in that** the provision of the ammonia quantity in step d) takes place by means of evaporation outside the exhaust gas in an evaporator and hydrolysis of urea-water solution outside the exhaust gas, with at least one of the following variables:
a) the heating power of the evaporator and
b) the quantity of urea-water solution supplied to the evaporator being regulated on the basis of the ammonia quantity calculated in step c), wherein further the present actual state of the internal combustion engine is also provided as a measured variable and a change in the state of the internal combustion engine is calculated on the basis of the change in the at least one actuating variable, so that a possible nominal state of the internal combustion engine is inferred and the nitrogen oxide content in the exhaust gas which is then present is calculated, and in which step b) takes place taking into consideration at least one previous value of at least one of the at least one measured variables and therefore comprises an extrapolation to a future nitrogen oxide emission, wherein a pedal transducer of a throttle pedal is considered as at least one actuating variable.

2. Method as claimed in claim 1, in which method a stored quantity of reducing agent and the possible conversion thereof is taken into consideration in step c).

3. Method as claimed in one of the preceding claims, in which method the probability of different possible changes in the state of the internal combustion engine from the actual state to possible nominal states is taken into consideration in step b).

4. Method as claimed in one of the preceding claims, in which method step b) comprises a parameter-adaptive estimation method.

5. Method as claimed in one of the preceding claims, in which method user-specific data is used in step b).

6. Device for carrying out the method as claimed in one of the preceding claims, comprising:
- means for determining the following variables:
i) a present actual state of the internal combustion engine (1) and
ii) at least one actuating variable for influencing the state of the internal combustion engine (1);
- control means (6) for calculating a possible nitrogen oxide emission of the internal combustion engine (1) on the basis of an evaluation of the at least one measured variable taking into consideration at least one previous value of at least one of the at least one measured variables and for calculating an ammonia quantity corresponding to the possible nitrogen oxide emission; and
- means for providing the ammonia quantity, comprising an evaporator (9), which is outside the exhaust gas, for evaporating urea-water solution, and a hydrolysis catalytic converter (10) which is outside the exhaust gas, and means (12) for supplying urea-water solution to the evaporator (9).

## Revendications

1. Procédé pour la préparation d'ammoniac en vue de la réduction catalytique sélective d'oxydes d'azote dans le système de gaz d'échappement d'un moteur à combustion interne, comprenant les étapes suivantes :
a) enregistrement d'au moins une grandeur de réglage en vue d'influencer l'état du moteur à combustion interne ;
b) calcul d'une émission éventuelle d'oxyde d'azote du moteur à combustion interne basé sur une évaluation de ladite au moins une grandeur mesurée ;
c) calcul d'une quantité d'ammoniac correspondant à l'émission éventuelle d'oxyde d'azote ; et
d) initiation de la mise à disposition de la quantité correspondante d'ammoniac,
**caractérisé en ce que** la mise à disposition de la quantité d'ammoniac dans l'étape d) a lieu par évaporation, externe au gaz d'échappement, dans un évaporateur et par hydrolyse, externe au gaz d'échappement, d'une solution aqueuse d'urée, au moins une des grandeurs suivantes :
a) la puissance de chauffage de l'évaporateur et
b) la quantité de solution aqueuse d'urée qui est alimentée dans l'évaporateur, étant réglée à l'aide de la quantité d'ammoniac calculée dans l'étape c), l'état instantané actuel du moteur à combustion interne étant en outre mis à disposition en tant que grandeur mesurée et une modification de l'état du moteur à combustion interne étant calculée à l'aide de la modification de ladite au moins une grandeur de réglage, de manière à déceler un état de consigne éventuel du moteur à combustion interne et la teneur en oxyde d'azote qui existe alors étant calculée, et dans lequel l'étape b) a lieu en tenant compte d'au moins une valeur antérieure d'au moins une desdites au moins une grandeur mesurée et comprend donc une extrapolation à une émission d'oxyde d'azote future, un indicateur de la valeur de la pédale d'une pédale d'accélération étant considéré comme au moins une grandeur de réglage.

2. Procédé selon la revendication 1, dans lequel, dans l'étape c), on tient compte d'une quantité accumulée d'agent de réduction et de sa transformation éventuelle.

3. Procédé selon l'une quelconque des revendications précédentes, dans lequel, dans l'étape b), on tient compte de la probabilité de modifications éventuelles de l'état du moteur à combustion interne de l'état instantané vers des états de consigne éventuels.

4. Procédé selon l'une quelconque des revendications précédentes, dans lequel l'étape b) comprend un procédé d'estimation adaptif aux paramètres.

5. Procédé selon l'une quelconque des revendications précédentes, dans lequel on utilise, dans l'étape b), des données spécifiques à l'utilisateur.

6. Dispositif pour la réalisation du procédé selon l'une quelconque des revendications précédentes, comprenant :
- des moyens pour la détermination des grandeurs suivantes :
i) un état instantané actuel du moteur à combustion interne (1) et
ii) au moins une grandeur de réglage en vue d'influencer l'état du moteur à combustion interne (1) ;
- des moyens de contrôle (6) pour calculer une émission éventuelle d'oxyde d'azote par le moteur à combustion interne (1) sur base d'une évaluation de ladite au moins une grandeur mesurée en tenant compte d'au moins une valeur antérieure d'au moins une desdites au moins une grandeur mesurée et pour calculer une quantité d'ammoniac correspondant à l'émission éventuelle d'oxyde d'azote ; et
- des moyens pour mettre à disposition la quantité d'ammoniac comprenant un évaporateur (9) externe au gaz d'échappement pour évaporer une solution aqueuse d'urée et un catalyseur d'hydrolyse (10) externe au gaz d'échappement, ainsi que des moyens (12) pour alimenter la solution aqueuse d'urée dans l'évaporateur (9).
